# EUROPEAN PATENT SPECIFICATION

(11) **EP 1 035 009 B1**
(45) Date of publication and mention of the grant of the patent: **28.04.2004**
(21) Application number: 00870029.6
(22) Date of filing: 22.02.2000
(51) Int. Cl.: B62L 3/00, B60T 11/06, B62L 1/14, B60T 11/04

(54) **Balanced braking system for a bicycle**
Ausgeglichenes Fahrradbremssystem
Système de freinage équilibré pour bicyclette

(30) Priority: 10.03.1999 US 265518
(43) Date of publication of application: 13.09.2000
(73) Proprietor: Juan, Chih-Chen, Hsin-Chun, Chiayi city (TW)
(72) Inventor: Juan, Chih-Chen, Hsin-Chun, Chiayi city (TW)
(74) Representative: Van Malderen, Joelle

(56) References cited:
- DE-C- 355 153
- US-A- 5 339 929
- US-A- 5 431 255
- US-A- 5 540 304

## Description

### BACKGROUND OF THE INVENTION

### 1. Field of the Invention

The present invention relates to a balanced braking system for a bicycle, particularly to a balanced braking system, which applies a braking force uniformly on the front and rear wheels of a bicycle, such that better stability is achieved and skidding is avoided.

### 2. Description of Related Art

Conventional braking systems for bicycles mostly have two independent brakes for the front and rear wheels, which are driven by two independent cables and operated by a left handle and a right handle on a handlebar. This arrangement enables a user to stop the bicycle. However, during braking the two brakes are not operated at exactly the same time. Furthermore, the tension of the two cables is not equal. Therefore, unequal braking forces are applied at different times on the front and rear wheels. One of the wheels may block, while the other is still rolling. Thus the braking effect is reduced, the bicycle possibly starts to skid or even falls over.

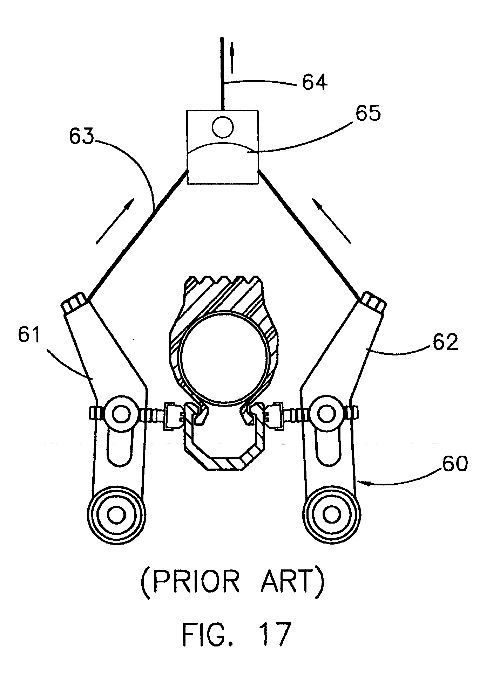

Apart from the problem of unequal forces applied at different times, conventional brakes for bicycles use pairs of right and left pincers, which do not apply equal frictional forces. As shown in Fig. 17, a conventional brake 60 for a bicycle wheel with a rim comprises left and right pincers 61, 62, pulled towards each other by a pulling cable 63 for applying a braking force on the rim; a connecting cable 64, operated by a handle; and a hook 65 for connecting the pulling cable 63 and the connecting cable 64. The hook 65 is a bent metal plate, which guides the pulling cable 63 and takes the pulling cable 63 along, so as to pull the left and right pincers 61, 62 towards each other.

However, if the bicycle wheel has an uneven rim or a rim with an uneven surface, the bicycle wheel during rotation will not keep uniform distances to the left and right pincers 61, 62. In the moment of braking, the left and right pincers 61, 62 will touch the rim at different times, and unequal braking forces will be applied.

Therefore, there is a need to adjust the time of contact of the left and right pincers 61, 62 and the rim automatically to ensure symmetric and even braking and preventing a reduced braking effect, blocking of the wheels and a risk of skidding.

In conventional bicycle brakes, a large frictional force occurs between the pulling cable 63 and the hook 65, so an asymmetric braking force of the left and right pincers 61, 62 on the rim is not easily compensated by gl iding of the pulling cable 63 within the hook 65. Thus an insufficient braking effect and a risk of skidding result.

US patent US-A-5,540,304 granted to Hawkins discloses a braking system with a single secondary cable operating both front brake and rear brake. This cable passes through a transmission unit comprising a lever and a pulley, allowing to pull the secondary cable so as to apply an equal force on front and rear brakes. A unique primary cable connected to a single brake handle on the handlebars operates the lever.

US Patent US-A-5,540,304 discloses in combination the following features of claim 1:

A balanced braking system to be used on a bicycle with a frame, a front brake and a rear brake, which are operated by a primary
cable, said balanced braking system comprising:
a connecting unit, having at least one driving element,
movable in a driving movement driven by said primary cable and
a secondary cable, having two ends that connect said front
and rear brakes and a middle part that runs over said driving element with little friction, revolving said driving element, said secondary cable being pulled aside by said driving movement of said driving element, as driven by the primary cable, and thereby operating said front and rear brakes, wherein different forces on said front brake and
said rear brake are compensated by said secondary cable moving along said driving element.

US patent US-A-5,431,255 granted to Tsuchle discloses a braking system with two wires fixed together in a relay amid the wires. It is then possible to actuate simultaneously the front and rear brakes by manipulation of either brake handle on the handlebars.

### SUMMARY OF THE INVENTION

It is an object of the present invention to provide a balanced braking system, which automatically applies a braking force uniformly at the same time on the front and rear wheels of a bicycle.

Another object of the present invention is to provide a balanced braking system with better stability of the cables during braking.

The present invention can be more fully understood by reference to the following description and accompanying drawings.

### BRIEF DESCRIPTION OF THE DRAWINGS

Fig. 1 is a side view of the balanced braking system of the present invention in conjunction with a bicycle.
Fig. 2 is a schematic illustration of the balanced braking system of the present invention in the first embodiment.
Fig. 3 is a side view of the present invention in the first embodiment.
Fig. 4 is a schematic illustration of the movement of the present invention in the first embodiment.
Fig. 5 is a front view of the present invention in the second embodiment.
Fig. 6 is a side view of the present invention in the second embodiment.
Fig. 7 is a front view of the present invention in the third embodiment.
Fig. 8 is a side view of the present invention in the third embodiment.
Fig. 9 is a top view of the present invention in the fourth embodiment.
Fig. 10 is a schematic illustration of the movement of the present invention in the fourth embodiment.
Fig. 11 is a top view of the present invention in the fifth embodiment.
Fig. 12 is a schematic illustration of the movement of the present invention in the fifth embodiment.
Fig. 13 is a side view of the present invention in the sixth embodiment.
Fig. 14 is a top view of the present invention in the seventh embodiment.
Fig. 15 is a top view of the balanced braking system of the present invention in the eighth embodiment.
Fig. 16 is a front view of pincers operated in conjunction with the present invention.
Fig. 17 (prior art) is a front view of a conventional braking system with pincers and cables.

### DETAILED DESCRIPTION OF THE PREFERRED EMBODIMENTS

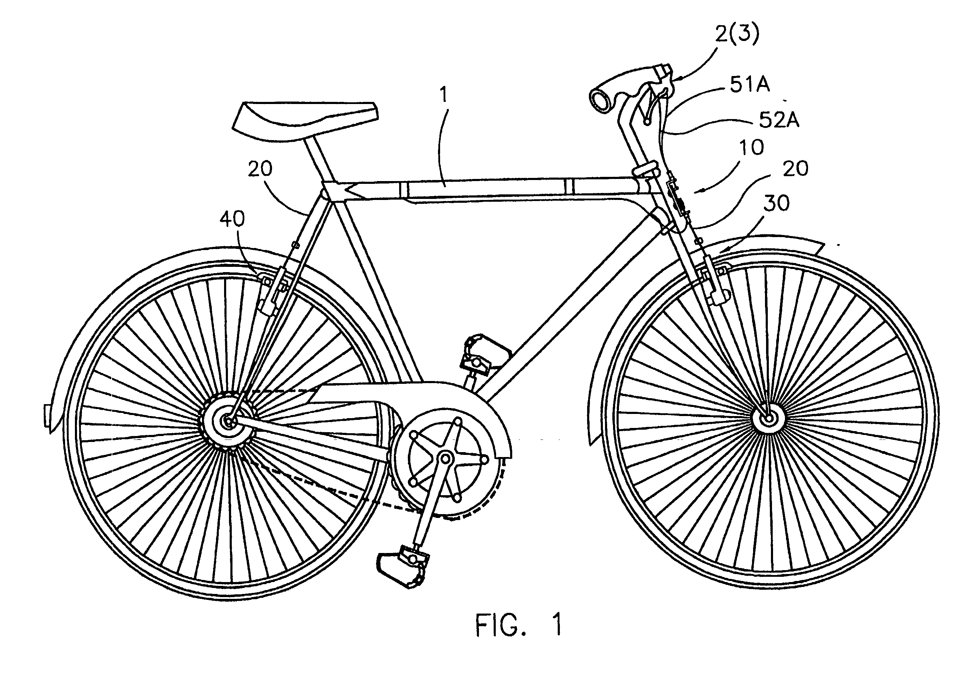

The balanced braking system of the present invention is used on a bicycle 1 having a frame, a front wheel with a front brake 30, a rear wheel with a rear brake 40, a left handle 2 with a left primary cable 51A, and a right handle 3 with a right primary cable 52A. As shown in Fig. 1, the balanced braking system of the present invention in a first embodiment mainly comprises: a connecting unit 10, mounted on the frame of the bicycle and having an upper end and a lower end; and a secondary cable 20, having two ends which lead to the front and rear brakes of the bicycle, driving the front and rear brakes 30, 40.

The connecting unit 10 is mounted on a suitable place on the frame. The left and right primary cables 51A, 52A are connected to the secondary cable 20, which in turn drives the front and rear brakes 30, 40.

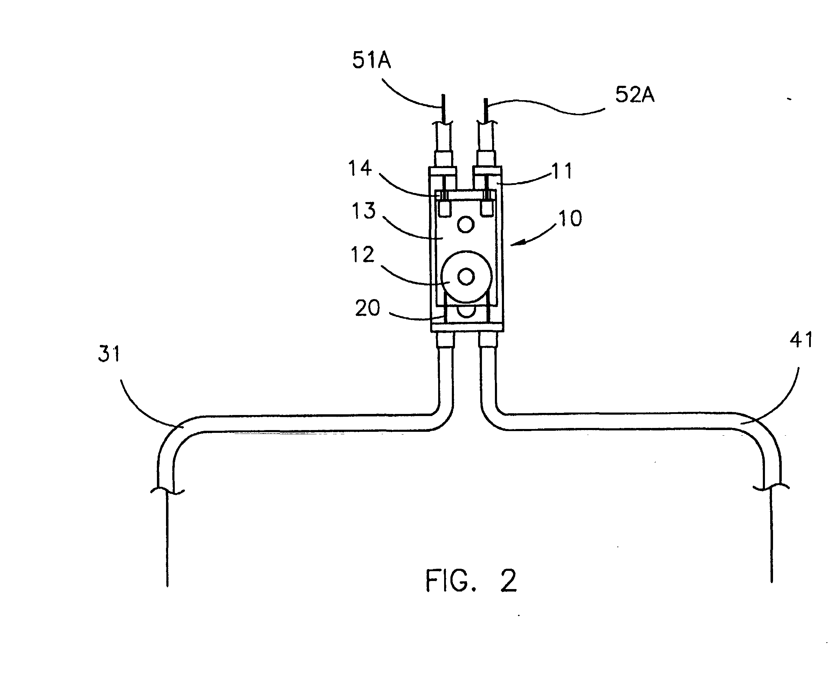

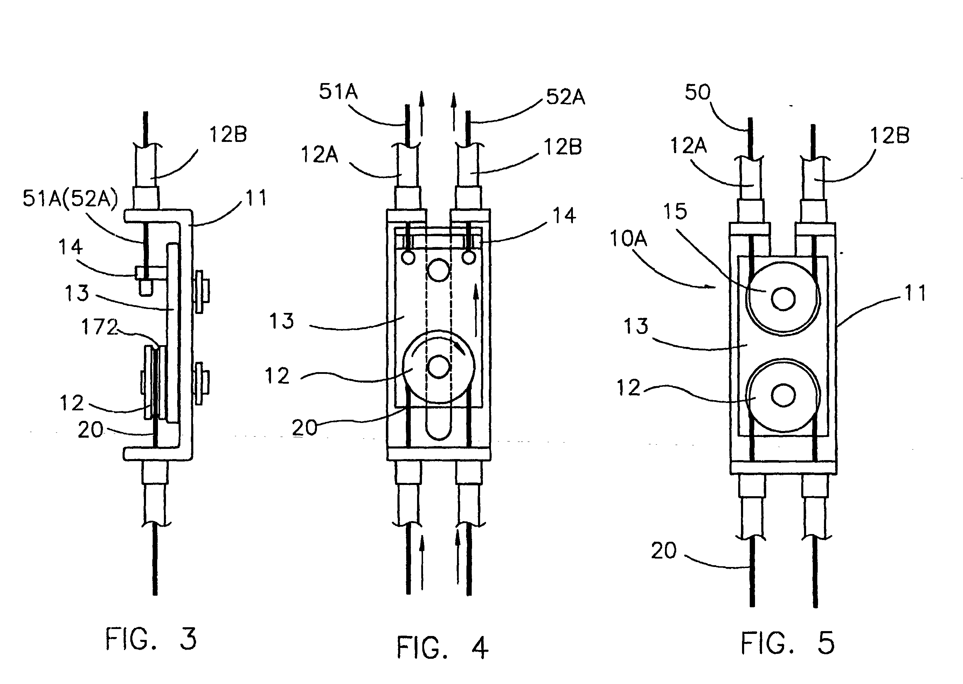

Referring to Fig. 2, the connecting unit 10 comprises: a main body 11, having an upper end and a lower end; two guiding tubes 12A, 12B on the upper end of the main body 11 for taking in the primary cables 2A, 3A (shown in Figs. 3 and 4); a driving element 12; and a shifting element 13, mounted inside the main body 11. In the first embodiment of the present invention, the shifting element 13 is a plate, movable in an upward and downward direction, having an upper end and a lower end. The left and right primary cables 51A, 52A are fastened to the upper end of the shifting element 13 at contact elements 14, pulling the shifting element 13 upward when operated. The driving element 12 is mounted on the lower end of the shifting element 13, guiding the secondary cable 20 in a middle section thereof. When the shifting element 13 is pulled upward, the secondary cable 20 is taken along, and the two ends thereof are pulled on, operating the front and rear brakes 30, 40. As shown in Figs. 2 and 3, the driving element 12 has a roll or a cylindrical body with a smooth peripheral surface, so that the secondary cable 20 glides around the driving element 12 with little friction.

The main characteristic of the present invention is that the secondary cable 20 is connected to both the front brake 30 and the rear brake 40. The driving element 12 revolves or allows the secondary cable 20 to glide thereon with little friction. When the driving element 12 pulls on the secondary cable 20, the secondary cable 20 is able to move easily along the driving element 12. Thus any non-uniform distribution of braking forces on the front and rear brakes 30, 40 is easily compensated. If, for instance, one of the front and rear brakes 30, 40 starts to grip before the other, the secondary cable will shift accordingly along the driving element 12, and a symmetric application of braking forces on the front and rear brakes 30, 40 is quickly established.

Referring again to Fig. 2, two guiding elements 31, 41 are attached to the lower end of the connecting unit 10. In the first embodiment of the present invention, the two guiding elements 31, 41 are tubes, surrounding the secondary cable 20 and reaching to the front and rear brakes 30, 40, respectively. Thus the secondary cable 20 starts at the front brake 30, passes through the guiding element 31, around the driving element 12 and through the guiding element 41 to end at the rear brake 40. When the secondary element 20 is pulled up on the middle section thereof by moving the shifting element 13 upward, the two guiding elements 31, 41 ensure that the secondary element 20 contacts the driving element 12 at constant angular positions and moves effortlessly. Thereby the front and rear brakes 30, 40 are operated symmetrically and with maximum effect. Furthermore, wear on the secondary cable 20 is kept at a minimum, such that the secondary cable 20 has an enhanced lifetime with reduced risk of breaking.

The driving element 12 is a roll, a cylinder or any element that guides the secondary cable 20 with low friction and at the same time allows to adjust the secondary cable 20. Furthermore rolls or other suitable elements are substitutable for the guiding elements 31, 41.

Therefore, independent of asymmetric operating of the right and left handles 2, 3, the connecting unit 10 ensures that both the front brake 30 and the rear brake 40 work simultaneously with equal forces. Thus a uniform braking effect is achieved, resulting in a shortened braking distance and higher stability.

When either the left handle 2 or the right handle 3 is operated, the shifting element 13 of the connecting unit 10 is pulled up, moving the driving element 12 and pulling on the secondary cable 20, so that both the front brake 30 and the rear brake 40 work simultaneously with equal forces. Thus riding the bicycle is made safer.

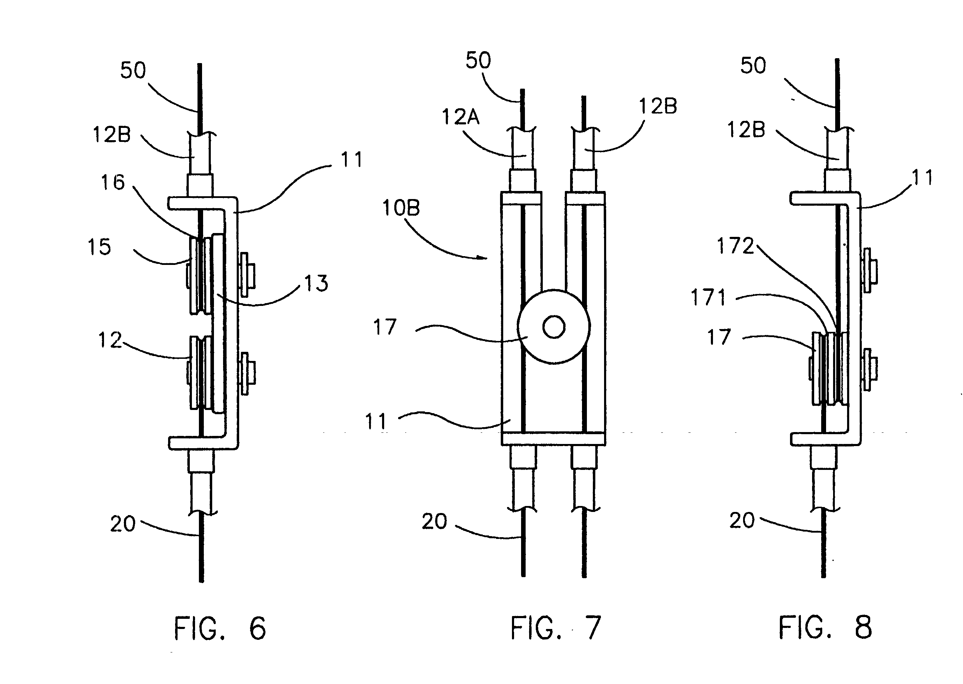

Referring to Figs. 5 and 6, the present invention in a second embodiment works in conjunction with a single primary cable 50. The primary cable 50 has two ends which are connected with the right and left handles 2, 3, respectively. The connecting unit 10 has a driven element 15 on the shifting element 13 thereof. The driven element 15 is a roll, having a peripheral groove 16. The primary cable 50, starting at the left handle 2, passes through the guiding tube 12A, runs around the driven element 15, guided by the peripheral groove 16 thereof, and again passes through the guiding tube 12B to end at the right handle 3. Therefore, operating either the left handle 2 or the right handle 3 causes the primary cable 50 to pull up the driven element 15, while the primary cable 50 is allowed to move along the driven element 15.

The characteristic of the second embodiment of the present invention is that forces on both ends of the primary cable 15 are balanced by revolving the driven element 15, so that the shifting element 13 is pulled up without tilting.

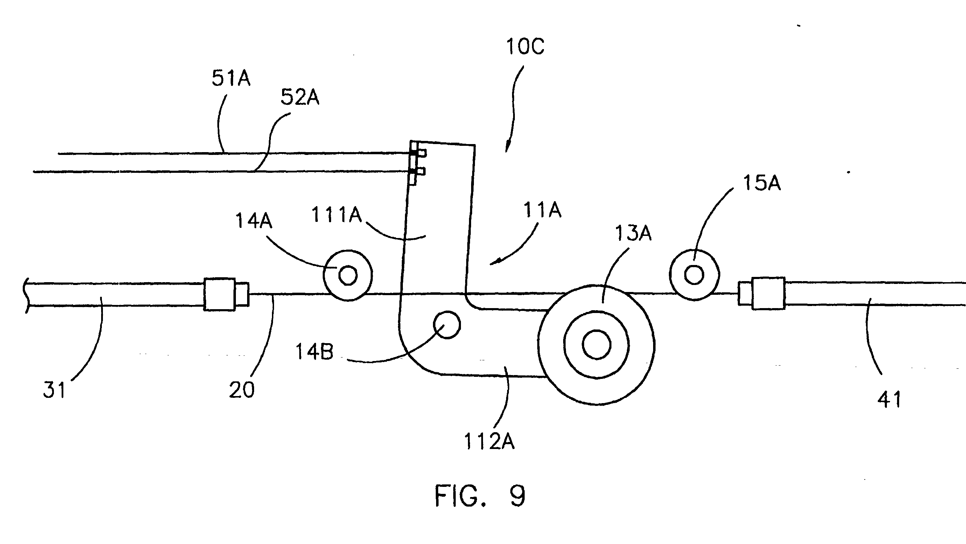

Referring to Figs. 7 and 8, the present invention in a third embodiment has a driving element 17, which is a roll with a peripheral groove 171 and a peripheral groove 172 The driving element 17 is mounted in the main body 11 and glidingly movable therein in the upward and downward direction. The primary cable 50 and the secondary cable 20 run over the driving element 17, guided by the peripheral grooves 172 and 171, respectively. By connecting the primary cable 50 with the driving element 17, the primary cable acts directly on the driving element 17 to pull on the secondary cable 20.

Referring to Fig. 9, the present invention in a fourth embodiment comprises: a connecting unit 10C and a secondary cable 20. The connecting unit 10C further comprises: a shifting element 11A; a bolt 14B; and a driving element 13A. The shifting element 11A is a lever arm shaped like the letter L, having a driven branch 111A and a driving branch 112A with a far end, which revolve around the bolt 14B. The bolt 14B is mounted on the frame of the bicycle.

The driven branch 111A is connected to the left and right handles 2, 3 by the left and right primary cables 51A, 52A. The driving element 13A is mounted on the far end of the driving arm 112A, guiding the secondary cable 20. The driving element 13A is a roll or an element that allows the secondary cable to glide thereon with little friction. Guiding elements 14A, 15A lead the secondary cable 20 from two sides on the driving element 13A, working like the guiding elements 31, 41 of the first embodiment and reducing wear of the secondary cable 20. The guiding elements 14A, 15A are rolls or elements that allows the secondary cable to glide with little friction.

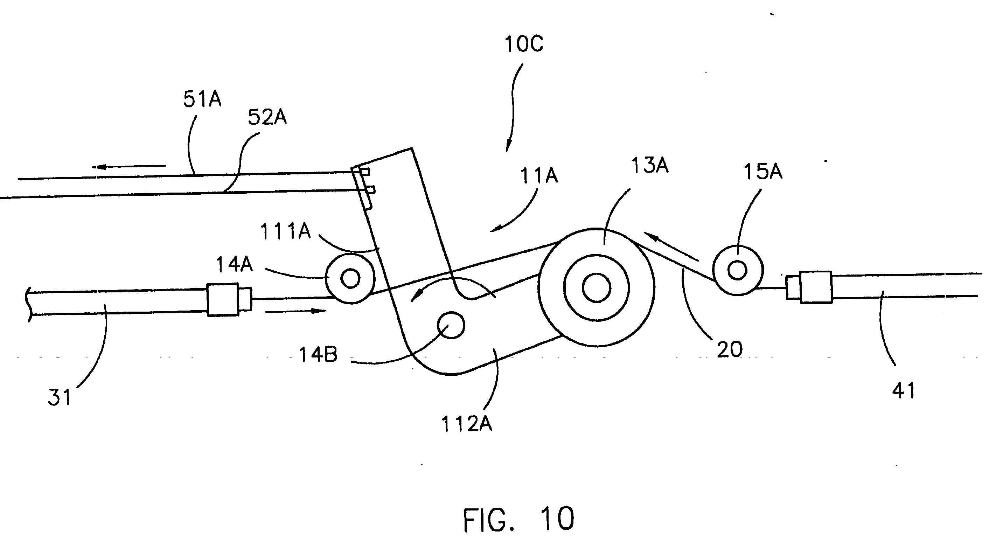

Referring to Fig. 10, when the left and right primary cables 51A, 52A pull on the shifting element 11A, the driving element 13A moves against the secondary cable 20, pushing the secondary cable 20 aside.

The connecting element 10C, as compared to the connecting element 10, transforms a linear movement into a turning movement and has less movable parts, resulting in better reliability.

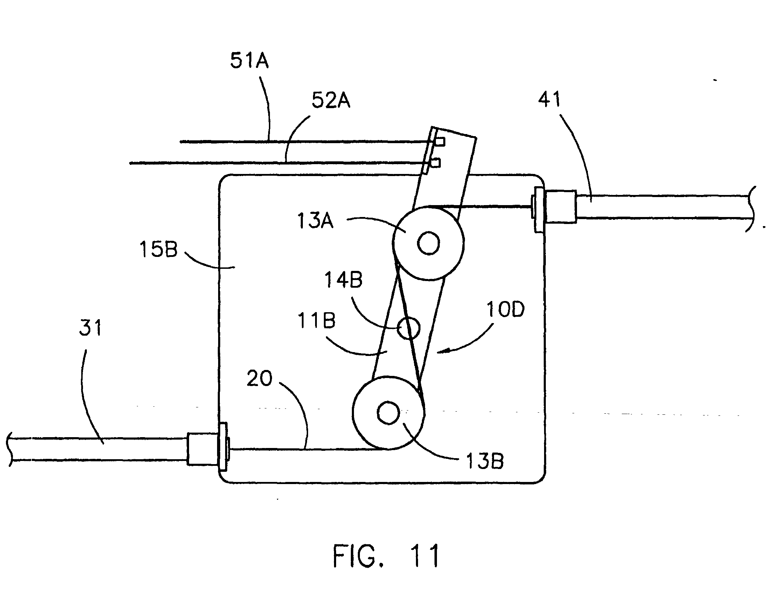

Referring to Fig. 11, the present invention in a fifth embodiment has a connecting unit 10D. The connecting unit 10D has a shifting element 11B which is a lever arm with two ends, turning around the bolt 14B. Driving elements 13A, 13B are mounted on the two ends of the shifting element 11B of the connecting unit 10D, with the bolt 14B located in between. The left and right primary cables 51A, 52A are both connected with one of the two ends of the connecting unit 10B, causing the connecting unit 10B to turn when pulled on. A support plate 15B for holding the connecting unit 10D and the driving elements 13A, 13B is fastened on the frame of the bicycle.

The secondary cable 20 connects the front brake 30 and the rear brake 40, passing through the guiding elements 31, 41 and, in a middle section between the guiding elements 31, 41, running around the driving elements 13A, 13B.

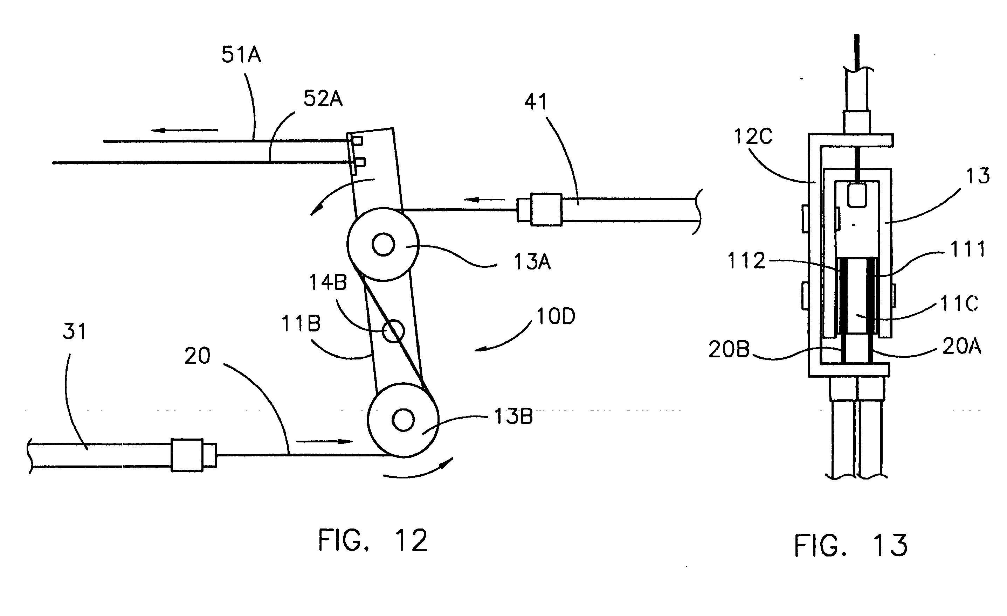

As shown in Fig. 12, when the left and right primary cables 51A, 52A pull on the connecting unit 10D, the connecting unit 10D is turned, shifting the secondary cable 20 and pulling on the ends thereof, such that the front and rear brakes 30, 40 are operated.

The connecting element 10D, like the connecting element 10C, as compared to the connecting element 10, transforms a linear movement into a turning movement and has less movable parts, resulting in better reliability.

A breakdown of both the front brake 30 and the rear brake 40 if the secondary cable 20 is damaged is prevented by the secondary cable 20 comprising two parallel cables. As shown in Fig. 13, the present invention in a sixth embodiment improves on the first embodiment, having the connecting unit 10 and separate secondary cables 20A, 20B. Two grooves 111, 112 are cut into the driving element 12, with the secondary cables 20A, 20B fastened therein, such that the secondary cables 20A, 20B are taken along with the driving element 12.

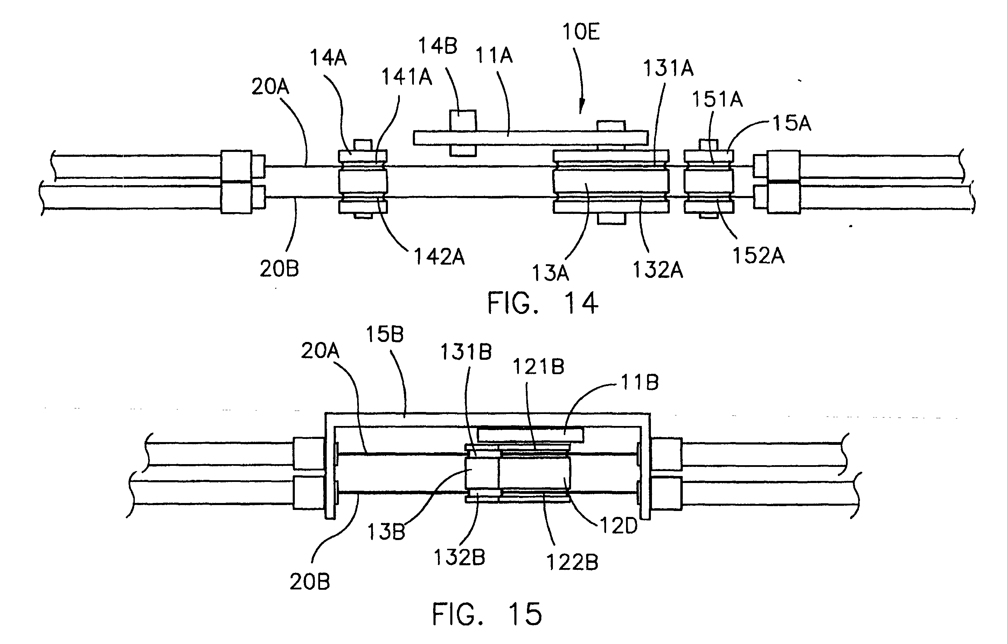

Referring to Figs. 14 and 15, a seventh embodiment of the present invention modifies the second embodiment thereof, using the separate secondary cables 20A, 20B, with the driving element 13A having a pair of grooves 131A, 132A, the guiding element 14A having a pair of grooves 141A, 142A, and the guiding element 15A having a pair of grooves 151A, 152A. Thus the secondary cables 20A, 20B are guided by the driving element 13A and the guiding elements 14A, 15A.

Referring to Fig. 15, an eighth embodiment of the present invention modifies the fifth embodiment thereof, using the separate secondary cables 20A, 20B, with a driving element 12D replacing the driving element 13A and having a pair of grooves 121B, 122B and the driving element 13B having a pair of grooves 131B, 132B. Thus the secondary cables 20A, 20B are guided by the driving elements 12D, 13B.

Employing the separate secondary cables 20A, 20B in the sixth, seventh and eighth embodiments of the present invention still allows the front and rear brakes 30, 40 to work if one of the secondary cables 20A, 20B has broken. Thus a much better safety of the braking system is achieved.

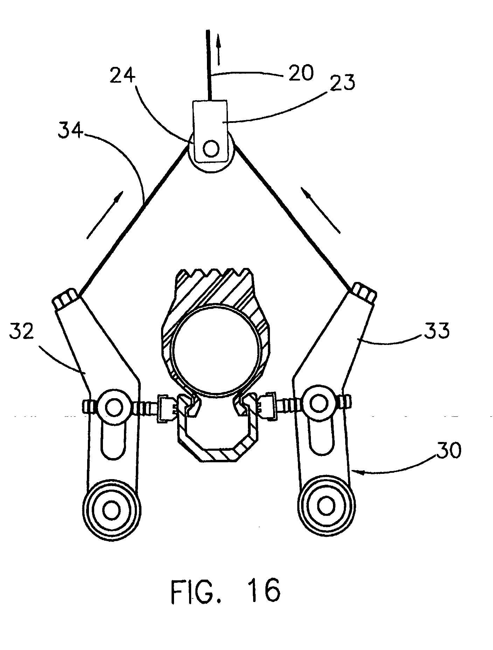

Referring to Fig. 16, the front brake 30 has left and right pincers 32, 33, having upper ends that are connected to each other by a tertiary cable 34. A pulling unit 23 connects the secondary cable 20 with the tertiary cable 34 on a middle section thereof. A driving element 24 is fastened to the pulling unit 23, guiding the tertiary cable 34. When the secondary cable 20 is pulled on, the pulling unit 23 together with the driving element 24 is taken along, pulling on the tertiary cable 34 on the middle section thereof. Thereby the pincers 32, 33 are brought together, gripping the front wheel.

The driving element 24 is a roll or a cylinder, which revolves or allows the tertiary cable 34 to glide thereon. Thus the tertiary cable 34 moves with little friction, and any asymmetric application of braking forces of the left and right pincers 32, 33 is easily compensated. If one of the left and right pincers 32, 33 presses earlier or harder against the front wheel than the other, the tertiary cable 34 will move, and a symmetric distribution of braking forces is quickly established.

The balanced braking system of the present invention is effective because the connecting element 10 and the secondary cable 20 are connected by the driving element 12, which is a roll or a relatively small structural part. The secondary cable connects the front and rear brakes 30, 40, running over the driving element 12 with little friction. If there is a different frictional behavior of the front brake 30 and the rear brake 40, the secondary cable 20 automatically compensates any difference. Thus it will not happen that the bicycle has a blocking wheel and a rolling wheel and skids or falls over.,

While the invention has been described with reference to preferred embodiments thereof, it is to be understood that modifications or variations may be easily made without departing from the spirit of this invention which is defined by the appended claims.

## Claims

1. A balanced braking system to be used on a bicycle with a frame, a front brake (30) and a rear brake (40), which are operated by primary cables (51A, 52A), said balanced braking system comprising:
a connecting unit (10), having at least one driving element (12), movable in a driving movement driven by said primary cables (51A, 52A), said connecting element comprising a shifting element (13), connected with said primary cables (51A, 52A) and taking along said at least one driving element (12) in said driving movement, as driven by said primary cables (51A, 52A); and
a secondary cable (20), having two ends that connect said front and rear brakes (30, 40) and a middle part that runs over said driving element (12) with little friction, revolving said driving element (12) or gliding thereon, said secondary cable (20) being pulled aside by said driving movement of said at least one driving element (12), as driven by said primary cables (51A, 52A), and thereby operating said front and rear brakes (30, 40);
wherein different forces on said front brake (30) and said rear brake (40) are compensated by said secondary cable (20) moving along said driving element (12).

2. A balanced braking system according to claim 1, wherein two guiding elements (31, 41) lead said secondary cable (20) to said driving element (12) from two sides in fixed directions, such that forces applied on said secondary cable (20) and wear thereof are reduced.

3. A balanced braking system according to claim 1, wherein said secondary cable (20) comprises two separate, parallel cables (20A, 208) that connect said front and rear brakes (30, 40), running over said driving element (12).

4. A balanced braking system according to claim 1, wherein said shifting element (13) is a gliding plate, which moves linearly, as driven by said primary cables (51A, 52A).

5. A balanced braking system according to claim 4, wherein said shifting element (13) has a roll, with said primary cables (51A, 52A) running around said roll.

6. A balanced braking system according to claim 1, wherein said driving element (12) is a roll or a cylinder.

7. A balanced braking system according to claim 1, wherein said front and rear brakes (30, 40) each have left and right pincers (32, 33), said balanced braking system further comprising:
a pulling unit (23), carrying a secondary driving element; and
a tertiary cable (34), having two ends that connect said left and right pincers (32, 33) and a middle part that runs over said secondary driving element with little friction, revolving said secondary driving element or gliding thereon, said tertiary cable (34) being moved aside by said shifting element (13), as driven by said secondary cable (20), thus pulling on said left and right pincers (32, 33);
wherein different forces on said left and right pincers (32, 33) are compensated by said tertiary cable (34) moving along said secondary driving element.

## Patentansprüche

1. Ausgleichsbremssystem zur Verwendung an einem Fahrrad mit einem Rahmen, einer Vorderbremse (30) und einer Rückbremse (40), die durch Primärkabel (51A, 52A) betrieben werden, wobei das Ausgleichsbremssystem aufweist:
eine Verbindungseinheit (10), die weiterhin aufweist wenigstens ein Treibelement (12), das getrieben von den Primärkabeln (51A, 52A) in einer Zugbewegung beweglich ist, und ein Verschiebeelement (13), das mit den Primärkabeln (51A, 52A) verbunden ist und das Treibelement (12) in der durch die Primärkabel (51A, 52A) getriebenen Zugbewegung mitnimmt; und
ein Sekundärkabel (20) mit zwei Enden, welche an der Vorderbremse (30) bzw. an der Rückbremse (40) angebracht sind, und einem Mittelabschnitt, der über das Treibelement (12) in einer Längsbewegung unter geringer Reibung läuft und dabei das Treibelement (12) dreht oder darauf gleitet, so daß mit der durch die Primärkabel (51A, 52A) getriebenen Zugbewegung des Treibelements (12) das Sekundärkabel (20) seitwärts weggezogen wird und dadurch die Vorder- und Rückbremse (30, 40) betreibt;
wobei unterschiedliche Kräfte auf die Vorderbremse (30) und die Rückbremse (40) durch die Längsbewegung des Sekundärkabels (20) entlang dem Treibelement (12) ausgeglichen werden.

2. Ausgleichsbremssystem nach Anspruch 1, wobei zwei Führungselemente (31, 41) das Sekundärkabel (20) von zwei Seiten in vorgegebenen Richtungen in das Treibelement (12) führen, so daß Kräfte auf das Sekundärkabel (20) reduziert werden und es zu weniger Abnutzung desselben kommt.

3. Ausgleichsbremssystem nach Anspruch 1, wobei das Sekundärkabel (20) zwei separate, parallele Kabel (20A, 20B) aufweist, welche die Vorder- und Rückbremse (30, 40) verbinden und über das Treibelement (12) laufen.

4. Ausgleichsbremssystem nach Anspruch 1, wobei das Verschiebeelement (13) eine Gleitplatte ist, die sich, durch die Primärkabel (51A, 52A) getrieben, linear bewegt.

5. Ausgleichsbremssystem nach Anspruch 1, wobei das Verschiebeelement (13) eine Rolle hat, über welche die Primärkabel (51A, 52A) laufen.

6. Ausgleichsbremssystem nach Anspruch 1, wobei das Treibelement (12) eine Rolle oder ein Zylinder ist.

7. Ausgleichsbremssystem nach Anspruch 1, wobei die Vorder- und Rückbremse (30, 40) jeweils mit linken und rechten Zangenelementen (32, 33) versehen sind und das Ausgleichsbremssystem weiterhin aufweist:
eine Zugeinheit (23), die ein sekundäres Treibelement hat; und
ein Tertiärkabel (34) mit zwei am linken bzw. rechten Zangenelement (32, 33) angebrachten Enden und einem in einer Längsbewegung über das sekundäre Treibelement mit geringer Reibung laufenden und diese dabei drehenden oder über diese gleitenden Mittelabschnitt, wobei das Tertiärkabel (34), durch das Verschiebeeelement (13) getrieben, vom Sekundärkabel (20), beiseitegezogen wird und dadurch am linken und rechten Zangenelement (32, 33) zieht;
wobei unterschiedliche auf das linke und rechte Zangenelement (32, 33) wirkende Kräfte durch die Längsbewegung des Tertiärkabels (34) ausgeglichen werden.

## Revendications

1. Système de freinage équilibré à utiliser sur une bicyclette avec un cadre, un frein avant (30) et un frein arrière (40) qui sont actionnés par des câbles primaires (51A, 52A), ledit système de freinage équilibré comprenant :
une unité de raccordement (10) ayant au moins un élément d'entraînement (12) mobile dans un mouvement d'entraînement entraîné par lesdits câbles primaires (51A, 52A), ledit élément de raccordement comprenant un élément de déplacement (13) raccordé auxdits câbles primaires (51A, 52A) et entraînant ledit au moins un élément d'entraînement (12) dans ledit mouvement d'entraînement, lorsqu'il est entraîné par lesdits câbles primaires (51A, 52A); et
un câble secondaire (20) ayant deux extrémités qui raccordent lesdits freins avant et arrière (30, 40) et une partie centrale qui se déplace sur ledit élément d'entraînement (12) avec peu de frottement, faisant tourner ledit élément d'entraînement (12) ou glissant sur celui-ci, ledit câble secondaire (20) étant tiré de côté par ledit mouvement d'entraînement dudit au moins un élément d'entraînement (12), lorsqu'il est entraîné par lesdits câbles primaires (51A, 52A), et actionnant ainsi lesdits freins avant et arrière (30, 40);
dans lequel les différentes forces imposées audit frein avant (30) et audit frein arrière (40) sont compensées par ledit câble secondaire (20) se déplaçant le long dudit élément d'entraînement (12).

2. Système de freinage équilibré selon la revendication 1, dans lequel deux éléments de guidage (31, 41) mènent ledit câble secondaire (20) audit élément d'entraînement (12) de deux côtés dans des directions fixes de manière à réduire les forces appliquées audit câble secondaire (20) et l'usure de celui-ci.

3. Système de freinage équilibré selon la revendication 1, dans lequel ledit câble secondaire (20) comprend deux câbles parallèles séparés (20A, 20B) qui raccordent lesdits freins avant et arrière (30, 40), se déplaçant sur ledit élément d'entraînement (12) .

4. Système de freinage équilibré selon la revendication 1, dans lequel ledit élément de déplacement (13) est une plaque glissante qui se déplace linéairement lorsqu'elle est entraînée par lesdits câbles primaires (51A, 52A).

5. Système de freinage équilibré selon la revendication 4, dans lequel ledit élément de déplacement (13) présente un rouleau autour duquel lesdits câbles primaires (51A, 52A) se déplacent.

6. Système de freinage équilibré selon la revendication 1, dans lequel ledit élément d'entraînement (12) est un rouleau ou un cylindre.

7. Système de freinage équilibré selon la revendication 1, dans lequel lesdits freins avant et arrière (30, 40) ont chacun des éléments formant pince gauche et droite (32, 33), ledit système de freinage équilibré comprenant en outre :
une unité de traction (23) portant un élément secondaire d'entraînement; et
un câble tertiaire (34) ayant deux extrémités qui raccordent lesdits éléments formant pince gauche et droite (32, 33) et une partie centrale qui se déplace sur ledit élément d'entraînement secondaire avec peu de frottement, faisant tourner ledit élément d'entraînement secondaire ou glissant sur celui-ci, ledit câble tertiaire (34) étant déplacé de côté par ledit élément de déplacement (13), lorsqu'il est entraîné par ledit câble secondaire (20), tirant ainsi sur les éléments formant pince gauche et droite (32, 33);
dans lequel les différentes forces imposées auxdits éléments formant pince gauche et droite (32, 33) sont compensées par ledit câble tertiaire (34) se déplaçant le long dudit élément d'entraînement secondaire.
